# EUROPEAN PATENT SPECIFICATION

(11) **EP 1 878 336 B1**
(45) Date of publication and mention of the grant of the patent: **27.03.2013**
(21) Application number: 06117234.2
(22) Date of filing: 14.07.2006
(51) Int. Cl.: A01G 33/00

(54) **Method of cultivating seaweed having adherence**
Verfahren zur Züchtung von Seetang mit Haftfähigkeit
Procédé de culture de goémon à adhérence

(43) Date of publication of application: 16.01.2008
(73) Proprietor: Atomic Energy Council - Institute of Nuclear Energy Research, Lungtan, Taoyuan, Taiwan (TW)
(72) Inventor: Chen, Chia-Chieh, Atomic Energy Council, Chiaan Village, Lungtan, Taoyuan 333 (TW); Chen, Yean-Chang, Atomic Energy Council, Chiaan Village, Lungtan, Taoyuan 333 (TW); Chen, Kuan-Yin, Atomic Energy Council, Chiaan Village, Lungtan, Taoyuan 333 (TW); Liu, Hsueh-Hsuan, Atomic Energy Council, Chiaan Village, Lungtan, Taoyuan 333 (TW); Lin, Bin, Atomic Energy Council, Chiaan Village, Lungtan, Taoyuan 333 (TW); Lee, Meng-Chou, Atomic Energy Council, Chiaan Village, Lungtan, Taoyuan 333 (TW); Kuo, Ming-Chao, Atomic Energy Council, Chiaan Village, Lungtan, Taoyuan 333 (TW); Hwang, Wen-Song, Atomic Energy Council, Chiaan Village, Lungtan, Taoyuan 333 (TW); Fu, Ying-Kai, Atomic Energy Council, Chiaan Village, Lungtan, Taoyuan 333 (TW); Lin, Wuu-Jyh, Atomic Energy Council, Chiaan Village, Lungtan, Taoyuan 333 (TW); Shen, Lie-Hang, Atomic Energy Council, Chiaan Village, Lungtan, Taoyuan 333 (TW)
(74) Representative: Beck, Michael Rudolf

(56) References cited:
- GB-A- 1 549 591
- US-A- 3 768 200
- OHNO MASAO ET AL: "Artificial seeding of the green seaweed Monostroma for cultivation" JOURNAL OF APPLIED PHYCOLOGY, vol. 9, no. 5, 1997, pages 417-423, XP002412017 ISSN: 0921-8971
- FORTES M. D. AND LUNING K.: "Growth rates of North Sea macroalgae in relation to temperature, irradiance and photoperiod", HELGOLANDER MEERESUNTERSUCHUNGEN, vol. 34, 1980, pages 15-29,
- AMADO FILHO GILBERTO M ET AL: "Effects on growth and accumulation of zinc in six seaweed species", ECOTOXICOLOGY AND ENVIRONMENTAL SAFETY, vol. 37, no. 3, 1997, pages 223-228, ISSN: 0147-6513
- BEN J LONGSTAFF ET AL: "An in situ study of photosynthetic oxygen exchange and electron transport rate in the marine macroalga Ulva lactuca (Chlorophyta)", PHOTOSYNTHESIS RESEARCH ; OFFICIAL JOURNAL OF THE INTERNATIONAL SOCIETY OF PHOTOSYNTHESIS RESEARCH, SPRINGER, BERLIN, DE, vol. 74, no. 3, 1 December 2002 (2002-12-01), pages 281-293, XP019263738, ISSN: 1573-5079, DOI: DOI:10.1023/A:1021279627409
- CHEN YEAN-CHANG: "THE HORMESIS OF THE GREEN MACROALGA ULVA FASCIATA WITH LOW-DOSE (60)COBALT GAMMA RADIATION", JOURNAL OF PHYCOLOGY, vol. 47, no. 4, August 2011 (2011-08), pages 939-943, ISSN: 0022-3646(print)
- NEERAJA S ET AL: "GAMMA-RAY INDUCED STUDIES ON RHIZOCLONIUM-HIEROGLYPHICUM AG. KUETZ", INDIAN BOTANICAL REPORTER, MARATHWADA UNIVERSITY, AURANGABAD, IN, vol. 8, no. 2, 1 January 1989 (1989-01-01) , pages 107-111, XP001248237, ISSN: 0254-4091

## Description

### Field of the invention

The present invention relates to a method of cultivating sea lettuce.

### Description of the Related Arts

Biological resources are abundant on earth. Under an estimation, the earth produces about 172.5 billions of biomass per year through photosynthesis. As renewable energy, the energy this biomass contains is about 10 to 20 times of the energy the world energy consumption. Yet, we utilize only 1 to 3 percent of this energy. Hence, the best solution for energy may lie in effectively utilizing biomass energy. Regarding seaweed as a material for biomass energy, seaweed production has to be maintained at a certain amount to make seaweed an alternative energy to oil. But most seaweeds grow along sea shores on the rocks, so that production is limited owing to the natural environment.

In connection with *Monostroma nitidum* Masao Ohno et al. describe in JOURNAL OF APPLIED PHYCOLOGY, vol. 9, no. 5, 1997, pages 417-423, "Artificial seeding of the green seaweed Monostroma for cultivation". This method includes the following steps:
a) Washing of fronds in seawater;
b) Inducing gamete release by drying the fronds overnight in the dark;
c) Subsequently putting the fronds into clean and warmer seawater and exposing them to bright light, ca. 100 µmol photon m⁻²s⁻¹ for 30 min.
d) Adding hot fresh water to reach a temperature of 2 to 3 °C above that of the spore release vats; using this technique a large quantity of gametes was obtained after 10 to 20 minutes;
e) The gamete solution is mixed in filtered seawater to allow the zygotes to form;
f) Adhesion boards are placed into the zygote solution for the zygotes to adhere on the boards;
g) The zygotes mature into zoosporangia (maturation is promoted through dark conditions for 2 to 3 weeks) over several months;
h) Subsequently, zoospores are released after an increase of water temperature and higher irradiance of ca. 100 µmol photon m⁻²s⁻¹;
i) These zoospores are attached to a substrate to develop into seedlings.

A method of cultivating sea lettuce after the stage of sprouting is described by M. D Fortes. and K. Luning in "Growth rates of North Sea macroalgae in relation to temperature, irradiance and photoperiod", HELGOLANDER MEERESUNTERSUCHUNGEN, vol. 34, 1980, pages 15-29.

### Summary of the invention

The object of the present invention is to cultivate sea lettuce by artificial seeding.

To achieve the above object, the present invention provides a method of cultivating sea lettuce according to claim 1. Advantageous embodiments are laid down in the further claims.

After obtaining floating germ cells by irritating sea lettuce with osmotic pressure, the germ cells obtain adherence to be fixed and cultured with productivity to supply material for biomass energy.

### Brief descriptions of the drawings

The present invention will be better understood from the following detailed description of the preferred embodiment according to the present invention, taken in conjunction with the accompanying drawings, in which:

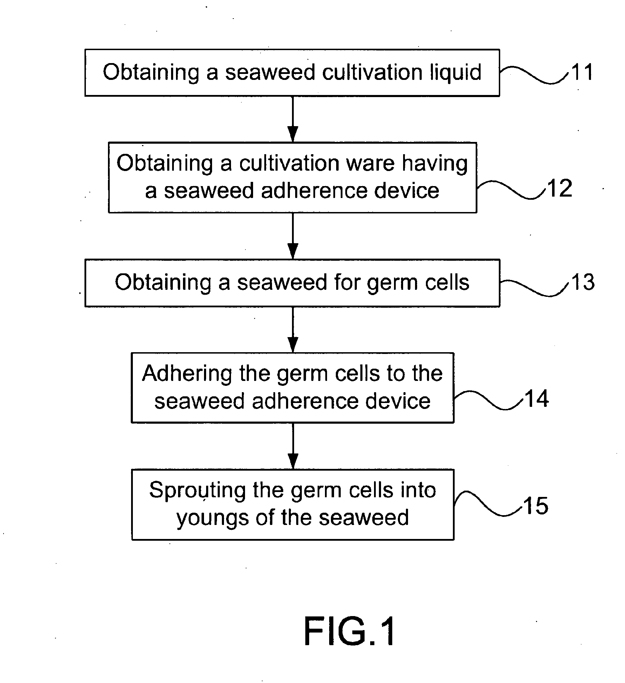

FIG. 1 is a view showing the flow chart of an embodiment according to the present invention.

### Description of the embodiment

The following description of the preferred embodiment is provided to understand the features and the structures of the present invention.

As shown in figure 1, the present invention is a method of cultivating a seaweed having adherence, comprising the following steps:
(a) Obtaining a seaweed cultivation liquid 11: A seaweed cultivation liquid is obtained from a sterilized seawater having a salinity of 3.5% added with 1 milliliter (ml) of a saturated germanium oxide solution.
(b) Obtaining a cultivation ware having a seaweed adherence device 12: A cultivation ware having a seaweed adherence device is obtained to be processed with a moist-heat sterilization followed with pouring in an amount of the seaweed cultivation liquid between 180ml and 220ml. Therein, the seaweed adherence device comprises a stainless frame and a cotton string; and the cotton string winds around the stainless frame.
(c) Obtaining a seaweed for germ cells 13: A seaweed is obtained to be deposed in a container having the seawater; and then the seaweed is irritated by an osmotic pressure (the salinity) to release germ cells. Therein, the seaweed is changed by the osmotic pressure and then is put in a dark place for a day. And, at last, the seaweed is irradiated for 1 to 2 hours (hr) to obtain germ cells, where the germ cells are floating on a surface of the seawater.
(d) Adhering the germ cells to the seaweed adherence device 14: The germ cells are put into the cultivation ware having the seaweed adherence device; and then the cultivation ware is put into a plant cultivation cabinet for the germ cells to adhere to the seaweed adherence device. Therein, a dropper is used to suck the germ cells to be dropped into the cultivation ware; and then the cultivation ware is put into the plant cultivation cabinet. The plant cultivation cabinet has an cultivation environment of a temperature between 20 Celsius degrees (°C) and 30°C, a luminous intensity between 145 and 155 µEm ²s⁻¹ and a photoperiod of 12/12 (light/dark) for the germ cells to be adhered to the seaweed adherence device.
(e) Sprouting the germ cells into youngs of the seaweed 15: After the germ cells are sprouted into youngs of the seaweed, the youngs are put into a centrifuge tube having 40ml of a seaweed cultivation liquid. Therein, the germ cells are adhered to the cotton string of the seaweed adherence device until each of the germ cells obtain a length between 1 and 1.5 millimeter (mm). Then the cotton string is cut to obtain a length between 5 and 7 centimeter (cm) to be put into a conical flask having 40ml of the seaweed cultivation liquid.

Through the above steps, after the floating germ cells are released by irritating the seaweed with times of osmotic pressures, the germ cells obtain adherence to be fixed and cultured with productivity.

Taking sea lettuce as an example, the present invention comprises the following steps:
(a) A seaweed cultivation liquid is obtained from a sterilized seawater having a salinity of 3.5% added with 1ml of a saturated germanium oxide solution.
(b) A cultivation ware having a seaweed adherence device is obtained to be processed with a moist-heat sterilization followed with pouring in 220ml of the seaweed cultivation liquid. Therein, the seaweed adherence device comprises a stainless frame having a size of 7cmx7cm, and a cotton string having a diameter of 1mm; and, the cotton string winds around the stainless frame.
(c) A seaweed is obtained to be deposed in a container having seawater, where the seaweed is irritated by osmotic pressure to release germ cells. The process includes the following steps: the seaweed obtained is washed with filtered seawater to remove adherent contaminants; the seaweed is washed with fresh water and put to dry at a dark place; the seaweed is washed with seawater, which is an osmotic-pressure irritation, in a way stimulating an ebb tide at a tidal flat on a rainy day; the sea lettuce is wrapped up with a wet tissue containing the seawater and is put in the dark place for 1hr; the sea lettuce is put into clean seawater to be placed overnight; the sea lettuce is moved to a container having the seawater; and, at last, the seaweed is irradiated for 1 to 2 hours (hr) to obtain germ cells floated on a surface of the seawater.
(d) The germ cells are put into the cultivation ware having the seaweed adherence device; and then the cultivation ware is put into a plant cultivation cabinet for the germ cells to adhere to the seaweed adherence device. Therein, a dropper is used to suck the germ cells to be dropped into the cultivation ware; and, at last, the cultivation ware is put into the plant cultivation cabinet. The plant cultivation cabinet has an cultivation environment of a temperature of 24°C, a luminous intensity of 150µEm-2s-1 and a photoperiod of 12/12 (light/dark) for the germ cells to be adhered to the seaweed adherence device.
(e) After the germ cells are sprouted into youngs of the seaweed, the youngs are put into a centrifuge tube having 40ml of a seaweed cultivation liquid. Therein, the germ cells are adhered to the cotton string of the seaweed adherence device until they obtain a length between 1mm and 1.5mm. Then the cotton string is cut to obtain a length of 6cm to be put into a conical flask having 40ml of the seaweed cultivation liquid.

To sum up, the present invention is a method for cultivating a seaweed having adherence, where, after obtaining floating germ cells by irritating a seaweed with osmotic pressures, the germ cells obtain adherence to be fixed and cultured with productivity.

## Claims

1. A method of cultivating sea lettuce having adherence, comprising steps of:
(a) obtaining a seaweed cultivation liquid;
(b) obtaining a cultivation ware having a seaweed adherence device, wherein said cultivation ware is loaded with said seaweed cultivation liquid after a sterilization;
(c) obtaining sea lettuce to be deposed in a container containing seawater, wherein said sea lettuce is irritated with osmotic pressure of salinity to release germ cells of sea lettuce through washing with fresh water, drying in the dark and subsequently washing with seawater;
(d) putting said germ cells of sea lettuce into said cultivation ware, wherein said cultivation ware is then deposed in a plant cultivation cabinet for said germ cells to be adhered to said seaweed adherence device under a luminous intensity between 145 µEm-2s-1 and 155 µEm-2s-1 and a photoperiod of 12/12 (light/dark); and
(e) after sprouting said germ cells to obtain youngs of sea lettuce, deposing said youngs into a conical flask having said seaweed cultivation liquid.

2. The method according to claim 1, wherein said seaweed cultivation liquid is obtained from a sterilized seawater having a salinity of 3.5% added with 1 milliliter (ml) of a saturated germanium oxide solution per liter.

3. The method according to claim 1 or 2, wherein said seaweed adherence device comprises a stainless frame and a cotton string; and wherein said cotton string winds around said stainless frame.

4. The method according to one of claims 1 to 3, wherein said sterilization in step (b) is a moist-heat sterilization.

5. The method according to one of claims 1 to 4, wherein said germ cells in step (c) are obtained through irradiating said sea lettuce; and wherein said germ cells float on the surface of said seawater in said container.

6. The method according to one of claims I to 5, wherein said plant cultivation cabinet in step (d) has an cultivation environment of a temperature between 20 Celsius degrees (°C) and 30°C, a luminous intensity between 145µEm-2s-1 and 155µEm-2s-1 and a photoperiod of 12/12 (light/dark).

7. The method according to claim 6, wherein said irradiation continues for a period between 1 and 2 hours.

8. The method according to one of claims 1 to 7, wherein said conical flask has a volume of 50ml; and wherein said conical flask has 40ml of said seaweed cultivation liquid.

## Patentansprüche

1. Verfahren zur Kultivierung von Meersalat mit Haftvermögen, das folgende Schritte umfasst:
( a ) Gewinnen einer Seetang-Kultivierungsflüssigkeit;
( b ) Beschaffen eines Kultivierungsgefäßes mit einer Seetang-Haftvorrichtung, wobei das Kultivierungsgefäß nach einer Sterilisation mit der Seetang-Kultivierungsflüssigkeit befüllt wird;
( c ) Beschaffen eines Meersalats zum Einsetzen in einen Behälter, der Meerwasser enthält, wobei der Meersalat durch den osmotischen Druck des Salzgehalts gereizt wird, um durch Waschen mit Frischwasser, Trocknen in Dunkelheit und anschließendes Waschen mit Meerwasser Keimzellen freizugeben;
( d ) Einbringen der Keimzellen des Meersalats in das Kultivierungsgefäß, wobei das Kultivierungsgefäß anschließend in einer Pflanzenkultivierungskabine angeordnet wird, damit die Keimzellen unter einer Lichtstärke zwischen 145 µEm-2s-1 und 155 µEm-2s-1 und einer Lichtperiode von 12/12 (hell/dunkel) an der Seetang-Haftvorrichtung anhaften; und
( e ) nach dem Aufkeimen der Keimzellen zum Gewinnen von jungem Meersalat: Anordnen des jungen Meersalats in einem Erlenmeyerkolben, der die Seetang-Kultivierungsflüssigkeit enthält.

2. Verfahren nach Anspruch 1, wobei die Seetang-Kultivierungsflüssigkeit aus sterilisiertem Meerwasser mit einem Salzgehalt von 3,5% und einem Zusatz von 1 Milliliter (ml) gesättigter Germaniumoxid-Lösung pro Liter gewonnen wird.

3. Verfahren nach Anspruch 1 oder 2, wobei die Seetang-Haftvorrichtung einen rostfreien Rahmen und einen Baumwollfaden umfasst; und wobei der Baumwollfaden um den rostfreien Rahmen gewunden ist.

4. Verfahren nach einem der Ansprüche 1 bis 3, wobei die Sterilisation in Schritt (b) eine Sterilisation mit feuchter Hitze ist.

5. Verfahren nach einem Ansprüche 1 bis 4, wobei die Keimzellen in Schritt (c) durch Bestrahlen des Meersalats gewonnen werden; und wobei die Keimzellen an der Oberfläche des Meerwassers in dem Behälter aufschwimmen.

6. Verfahren nach einem Ansprüche 1 bis 5, wobei die Pflanzenkultivierungskabine in Schritt (d) eine Kultivierungsumgebung mit einer Temperatur zwischen 20 Grad Celsius (°C) und 30°C, einer Lichtstärke zwischen 145 µEm-2s-1 und 155 µEm-2s-1 und einer Lichtperiode von 12/12 (hell/dunkel) aufweist.

7. Verfahren nach Anspruch 6, wobei die Bestrahlung über eine Periode von 1 bis 2 Stunden erfolgt.

8. Verfahren nach einem der Ansprüche 1 bis 7, wobei der Erlenmeyerkolben ein Fassungsvermögen von 50 ml aufweist; und wobei der Erlenmeyerkolben 40 ml Seetang-Kultivierungsflüssigkeit enthält.

## Revendications

1. Procédé de culture de la laitue de mer ayant de l'adhérence comprenant les étapes :
(a) d'obtention d'un liquide de culture d'algues ;
(b) d'obtention d'un produit de culture ayant un dispositif d'adhérence d'algues, ledit produit de culture étant chargé avec ledit liquide de culture d'algues après stérilisation ;
(c) d'obtention de laitue de mer à déposer dans un conteneur contenant de l'eau de mer, ladite laitue de mer étant irritée avec la pression osmotique de salinité pour libérer des cellules germinales de laitue de mer par lavage avec de l'eau fraîche, séchage dans l'obscurité et ensuite lavage avec de l'eau de mer ;
(d) de placement desdites cellules germinales de laitue de mer dans ledit produit de culture, ledit produit de culture étant ensuite déposé dans une armoire de culture de végétaux pour que lesdites cellules germinales adhèrent au dispositif d'adhérence d'algues mentionné avec une intensité lumineuse entre 145 µEm-2s-1 et 155 µEm-2s-1 et une photopériode de 12/12 (lumière/obscurité) et
(e) après germination desdites cellules germinales pour obtenir des jeunes plantes de laitue de mer, dépôt des jeunes plantes dans un flacon conique ayant ledit liquide de culture d'algues.

2. Procédé selon la revendication 1 dans lequel ledit liquide de culture d'algues est obtenu à partir d'eau de mer stérilisée ayant une salinité de 3,5% à laquelle 1 millilitre (ml) de solution saturée d'oxyde de germanium est ajouté par litre.

3. Procédé selon la revendication 1 ou 2 dans lequel ledit dispositif d'adhérence d'algues comprend un cadre en acier inoxydable et un cordon en coton et dans lequel ledit cordon en coton s'enroule autour dudit cadre en acier inoxydable.

4. Procédé selon l'une quelconque des revendications 1 à 3 dans lequel ladite stérilisation dans l'étape (b) est une stérilisation par la chaleur humide.

5. Procédé selon l'une quelconque des revendications 1 à 4 dans lequel lesdites cellules germinales dans l'étape (c) sont obtenues par irradiation de ladite laitue de mer et dans lequel lesdites cellules germinales flottent sur la surface de ladite eau de mer dans ledit conteneur.

6. Procédé selon l'une quelconque des revendications 1 à 5 dans lequel ladite armoire de culture de végétaux dans l'étape (d) a un environnement de culture d'une température entre 20 degrés Celsius (°C) et 30 °C, une intensité lumineuse entre 145 µEm-2s-1 et 155 µEm-2s-1 et une photopériode de 12/12 (lumière/obscurité).

7. Procédé selon la revendication 6 dans lequel ladite irradiation continue pendant une période entre 1 et 2 heures.

8. Procédé selon l'une quelconque des revendications 1 à 7 dans lequel ledit flacon conique a un volume de 50 ml et dans lequel ledit flacon conique a 40 ml dudit liquide de culture d'algues.
